# FASCICULE DE BREVET EUROPEEN

(11) **EP 2 672 804 B1**
(45) Date de publication et mention de la délivrance du brevet: **01.01.2020**
(21) Numéro de dépôt: 12708884.7
(22) Date de dépôt: 09.02.2012
(51) Int. Cl.: A01C 7/04

(54) **BOITIER DE DISTRIBUTION POUR SEMOIR MONOGRAINE AVEC PALES D'AGITATION ET SEMOIR UTILISANT UN TEL BOITIER**
VERTEILERKASTEN FÜR EINZELSÄMASCHINE MIT RÜHRKLINGEN UND SÄMASCHINE MIT EINEM SOLCHEN KASTEN
DISTRIBUTION BOX FOR SINGLE-SEED DRILL HAVING STIRRING BLADES, AND SEED DRILL USING SUCH A BOX

(30) Priorité: 10.02.2011 FR 1151073
(43) Date de publication de la demande: 18.12.2013
(73) Titulaire: KUHN S.A., 67700 Saverne (FR)
(72) Inventeur: AUDIGIE, Jean-Charles, 67330 Bouxwiller (FR)
(74) Mandataire: Esch, Esther Evelyne
(86) Numéro de dépôt international: PCT/FR2012/050277
(87) Numéro de publication internationale: WO 2012/168580

(56) Documents cités:
- EP-A1- 0 338 883
- FR-A1- 2 713 436
- US-A1- 2002 170 476
- US-B1- 6 247 418

## Description

La présente invention se rapporte au domaine technique général du machinisme agricole. L'invention concerne un boîtier de distribution pour semoir monograine comportant un disque perforé monté rotatif sur un axe horizontal pour la sélection de graines assistée par un flux d'air, ledit disque séparant lesdites graines du flux d'air et présentant des perforations disposées à intervalles réguliers sur au moins deux cercles concentriques situés au voisinage de sa périphérie, lesdites perforations desdits deux cercles étant décalées angulairement l'une par rapport à l'autre et étant de taille adaptée aux graines à semer.

Un tel boîtier de distribution est présenté dans la demande FR 2 713 436**.** Ce boîtier de distribution pour semoir monograine comporte un disque rotatif monté sur un axe horizontal. Le disque est perforé, il peut sélectionner des graines grâce à un flux d'air permettant d'aspirer et de retenir la graine pendant une partie de sa rotation. Les perforations sont disposées, près de la périphérie du disque, sur deux rangées circulaires coaxiales. Les perforations extérieures et intérieures sont arrangées en quinconce et ont une taille adaptée à la graine qui est semée. L'utilisation d'un tel disque permet d'avoir un travail plus rapide en maintenant une vitesse de rotation lente du disque. La rangée intérieure n'est que peu éloignée de la rangée extérieure ce qui réduit les graines aspirées à celles au fond du boîtier. Les graines viennent s'appliquer par aspiration sur les perforations en laissant des voûtes de tassement dans le fond du boîtier. Ces voûtes résistent à la dépression et au frottement peu important de la surface lisse du disque plan et provoque donc des manques lors du semis.

Pour éviter que deux graines soient aspirées par une perforation, un sélecteur agit sur les graines disposées dans les perforations de la rangée située la plus à l'extérieur du disque. L'élimination des graines doubles sur la rangée intérieure se fait par l'intermédiaire des graines de la rangée la plus à l'extérieur du disque, ceci est possible étant donné que les deux rangées de perforations ne sont pas trop éloignées l'une de l'autre. Pour faciliter cette élimination sur la rangée intérieure, le diamètre des perforations est réduit par rapport au diamètre des perforations de la rangée extérieure. De ce fait, l'action indirecte du sélecteur sur les perforations de la rangée intérieure entraîne l'élimination des deux graines et par là provoque un manque et conduit à un semis non régulier.

D'autres distributions à dépression pour semoir monograine utilisent des disques avec des protubérances adaptées à la taille et au poids de chaque graine. A chaque espèce de graine correspond un disque avec des protubérances spécifiques. Ces protubérances dépassent de la surface du disque et réalisent un brassage des graines contenues dans le fond du boîtier. Ce brassage permet un semis plus régulier puisqu'il favorise l'application des graines sur les protubérances en évitant les manques. Le disque avec ses protubérances doit être réalisé avec une précision élevée pour assurer une sélection optimale des graines par dépression. L'utilisation de disques moulés en matière plastique permet une adaptation correcte à chaque espèce graine. De tels disques présentent des protubérances réparties sur un seul diamètre. Ainsi pour un semis à forte densité, c'est la vitesse de rotation du disque qui est augmentée. Le temps de prise de graines est par conséquent réduit ce qui donne lieu à des manques et entraîne un semis irrégulier.

Un autre boîtier de distribution avec des nervures d'agitation sur sa périphérie est connu de US2002/0170476 A1.

La présente invention a pour but de remédier aux inconvénients précités. Elle doit notamment proposer un boîtier de distribution permettant un travail rapide tout en maintenant une vitesse de rotation du disque lente et assurant un semis régulier sans graines doubles et sans manques.

A cet effet, une importante caractéristique de l'invention consiste en ce que le disque est muni sur sa périphérie de pales d'agitation régulièrement espacées et décalées angulairement par rapport auxdites perforations, que lesdites pales d'agitation s'étendent sur un cercle concentrique auxdits cercles et que le cercle s'étend entre les deux cercles, de manière que chaque pale a une action à la fois sur les perforations du cercle extérieur et celles du cercle intérieur. Grâce aux pales d'agitation, les graines contenues dans le fond du boîtier sont brassées par la rotation du disque ce qui empêche la formation d'une voûte de tassement et favorisent l'application des graines sur les perforations.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une vue en perspective éclatée d'un boîtier de distribution pour semoir monograine selon la présente invention,
- la **figure 2** représente un disque de distribution selon l'invention,
- la **figure 3** est une vue illustrant le fonctionnement du disque de distribution selon l'invention.

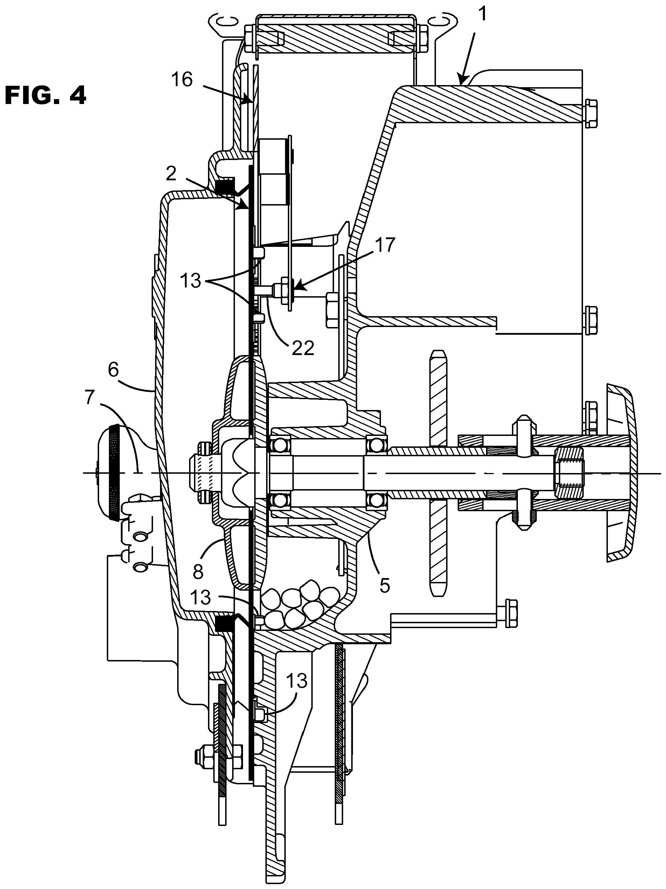

- la **figure 4** est une vue en coupe suivant la ligne IV-IV de la figure 3.

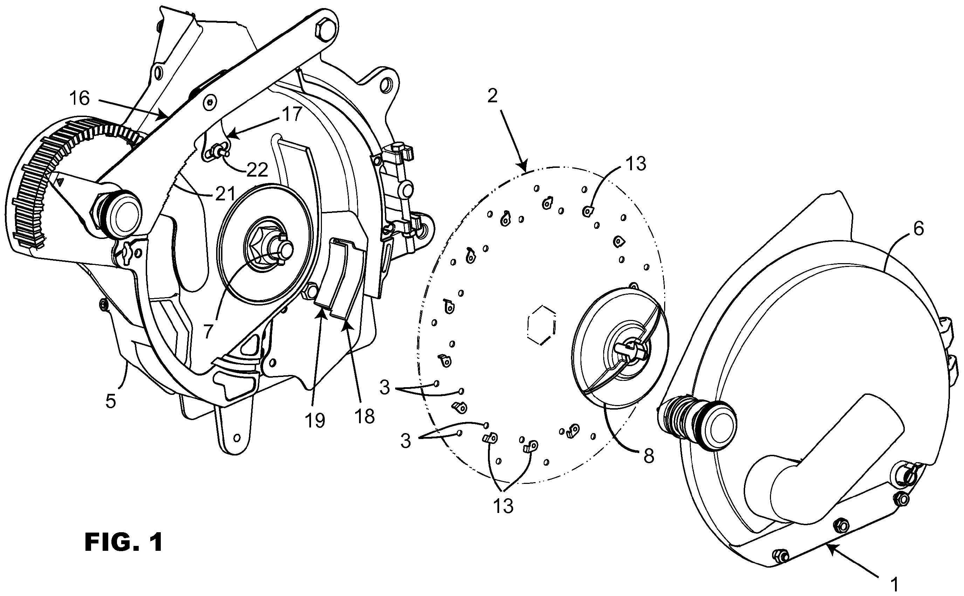

La figure 1 montre une vue éclatée en perspective d'un boîtier de distribution (1) selon l'invention. De tels boîtiers (1) se retrouvent généralement sur des semoirs monograine (non représentés). De tels semoirs travaillent sur plusieurs rangées et présentent un élément semeur (non représenté) par rang de semis. Les éléments semeurs sont répartis sur le châssis sensiblement horizontal et perpendiculaire à la direction d'avance au travail (A). Dans la suite de la description, les notions "avant" et "arrière" sont définies par rapport au sens d'avance (A). L'écartement entre chaque rang comme l'écartement entre les éléments semeurs est constant. Chaque élément semeur possède sa trémie, sa distribution, ses organes d'enterrage, de rappuyage, de recouvrement et de contrôle de profondeur. Chaque élément semeur est monté respectivement sur le châssis au moyen d'un parallélogramme déformable lequel permet à l'élément semeur de rester parallèle au sol en toutes positions. La distribution ou le boîtier de distribution (1) a pour rôle d'extraire une à une les graines de la trémie et de les répartir à intervalle constant sur le rang. La trémie constitue la réserve de graines et alimente normalement un rang.

Le boîtier de distribution (1) selon l'invention permet l'extraction des graines au moyen d'un disque (2) perforé. Le disque (2) présente des perforations (3) disposées à intervalles réguliers sur au moins une circonférence voisine du pourtour du disque (2). Le disque (2) est mis en rotation pour permettre la sélection de graines assistée par un flux d'air. Les graines sortent avec un espacement régulier du boîtier de distribution (1) par un tube de descente (4) qui amène la graine dans le sillon. Les organes d'enterrage créent un sillon à une profondeur déterminée pour y placer la graine et la recouvrir de terre.

Le boîtier de distribution (1) comporte un carter (5) de forme générale cylindrique et un couvercle (6). Le disque (2) est monté dans le carter (5). Il est monté rotatif sur un axe de rotation (7). Il est fixé sur cet axe de rotation (7) par un écrou (8). Il s'agit d'un écrou à serrage rapide. Le disque (2) est entraîné en rotation via des éléments d'entraînement en fonction de la vitesse d'avance du semoir. Ainsi la vitesse de distribution est adaptée à la vitesse d'avancement du semoir ce qui permet de semer les graines à des écartements constants. Le flux d'air pour la sélection des graines est produit par une turbine entraînée par la prise de force du tracteur. La sélection des graines est assistée par un flux d'air en dépression ou en pression. En adaptant le disque (2) et notamment les perforations (3) à la taille et au poids des graines, un tel boîtier de distribution (1) peut semer un grand nombre d'espèces.

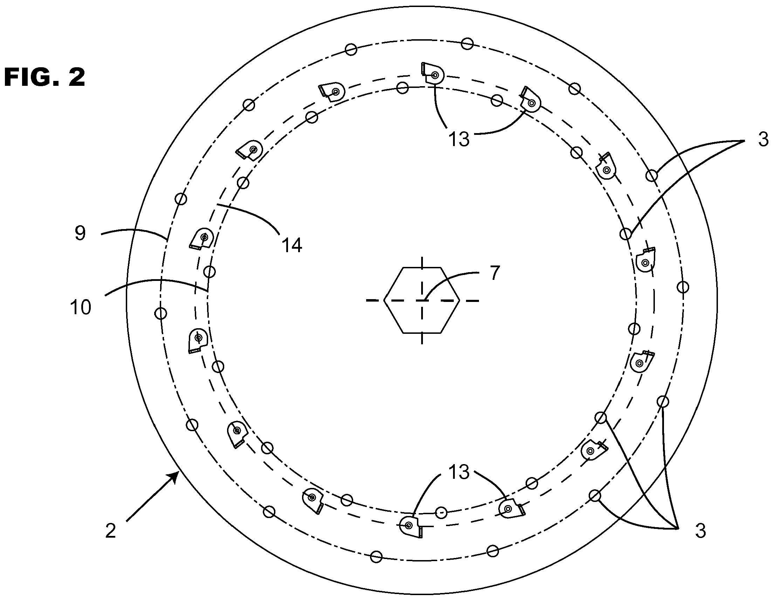

Dans l'exemple de réalisation des figures, le disque (2) est plan et est amené à tourner dans un plan sensiblement vertical. L'axe de rotation (7) est sensiblement horizontal. Selon la figure 2, le disque (2) présente des perforations (3) réparties sur au moins deux cercles concentriques (9, 10). Avec une telle configuration du disque (2), le boîtier de distribution (1) est capable de délivrer un nombre important de graines à la seconde et peut donc être utilisé pour une vitesse de travail importante. Ce boîtier de distribution (1) permet un semis à forte fréquence tout en ayant une vitesse de rotation du disque (2) normale, c'est-à-dire suffisamment lente pour que les graines soient semées régulièrement. La rotation lente du disque (2) assure un temps suffisant pour que chaque perforation (3) soit pourvue d'au moins une graine. Les manques sont donc limités et le semis s'effectue en respectant un écartement régulier entre les graines. Chacun des cercles (9, 10) présentant un même nombre de perforations (3). Ce nombre de perforations (3) étant adapté à l'espèce de graine et au diamètre du disque (2). Les cercles (9, 10) sont coaxiaux et centrés sur l'axe de rotation (7). Ils sont situés au voisinage de la périphérie du disque (2). Les perforations (3) des deux cercles (9, 10) sont décalés angulairement les unes par rapport aux autres. Les perforations (3) sont réparties sur un cercle extérieur (9) et sur un cercle intérieur (10). Le cercle extérieur (9) ayant un diamètre plus grand que le diamètre du cercle intérieur (10). Le cercle extérieur (9) est celui qui est le plus proche de la périphérie du disque (2).

Les perforations (3) sont soumises à un flux d'air en dépression. Les graines sont prélevées dans le fond de boîtier (11) et sont lâchées au niveau de l'ouverture de décharge (12). Le disque (2) plonge dans le fond de boîtier (11) et tourne en emportant sur les perforations (3) des graines maintenues par dépression. Les perforations (3) des deux cercles (9, 10) sélectionnent le même type de graines. Les graines sont retenues par dépression au travers des perforations (3) pendant au moins une partie de leur déplacement angulaire. Les perforations (3) sont soumises à cette dépression jusqu'au voisinage de l'ouverture de décharge (12) des graines. Le disque (2) sépare les graines du flux d'air ainsi la dépression est exercée du côté opposé.

Selon une importante caractéristique de l'invention, le disque (2) est muni sur sa périphérie de pales d'agitation (13) régulièrement espacées et décalées angulairement par rapport auxdites perforations (3), lesdites pales d'agitation (13) s'étendent entre deux cercles (9, 10). Grâce à ces pales d'agitation (13), les graines contenues dans le fond de boîtier (11) sont brassées par la rotation du disque (2) ce qui empêche la formation d'une voûte de tassement. Ainsi équipé, le boîtier de distribution (1) distribue les graines avec une fréquence élevée tout en maintenant une vitesse de rotation du disque (2) suffisamment lente pour assurer un semis sans manques. De cette manière, l'application des graines sur les perforations (3) est favorisée. L'opération de semis s'effectue à une vitesse de travail importante, environ 12 à 15 km/h, tout en garantissant un semis régulier et sans manques. Les pales d'agitation (13) sont disposées sur une circonférence voisine du pourtour du disque (2). La sélection des graines est facilitée par lesdites pales d'agitation (13). Elles s'étendent sur un cercle concentrique (14) auxdits cercles (9, 10) de perforations (3). Ce cercle (14) s'étend entre lesdits deux cercles (9, 10). Les pales ont ainsi une action à la fois sur les perforations (3) du cercle extérieur (9) et celles du cercle intérieur (10). D'une manière avantageuse, le diamètre du cercle concentrique (14) est voisin du diamètre du cercle intérieur (10). Le nombre de pales d'agitation (13) est adapté en fonction du type de graines. Ce nombre est un nombre égal, multiple ou diviseur au nombre de perforations (3) formant l'un des cercles (9, 10). La disposition des pales d'agitation (13) sur le disque (2) ne doit pas gêner la prise des graines dans le fond de boîtier (11).

D'après la figure 2, une perforation (3) appartenant au cercle intérieur (10) est décalée de la même distance par rapport aux deux perforations les plus proches du cercle extérieur (9). Chaque pale d'agitation (13) est disposée pour ne pas gêner l'éjection des graines du cercle intérieur (10). Dans l'exemple de réalisation, chaque pale d'agitation (13) s'étend à l'arrière d'une perforation (3) du cercle intérieur (10) compte tenu du sens de rotation dudit disque (2). Pour une bonne prise de graines dans le fond de boîtier (11), les pales d'agitation (13) sont éloignées des perforations (3). Les pales d'agitation (13) ont pour fonction de remuer les graines se trouvant dans le fond de boîtier (11).

Dans une alternative non représentée, le disque (2) présente des perforations disposées à intervalles réguliers sur trois cercles concentriques et des pales d'agitation disposées sur deux cercles concentriques. Une première série de pales d'agitation s'étend entre le cercle extérieur et le cercle intermédiaire de perforations et une deuxième série de pales d'agitation s'étend entre le cercle intermédiaire et le cercle intérieur.

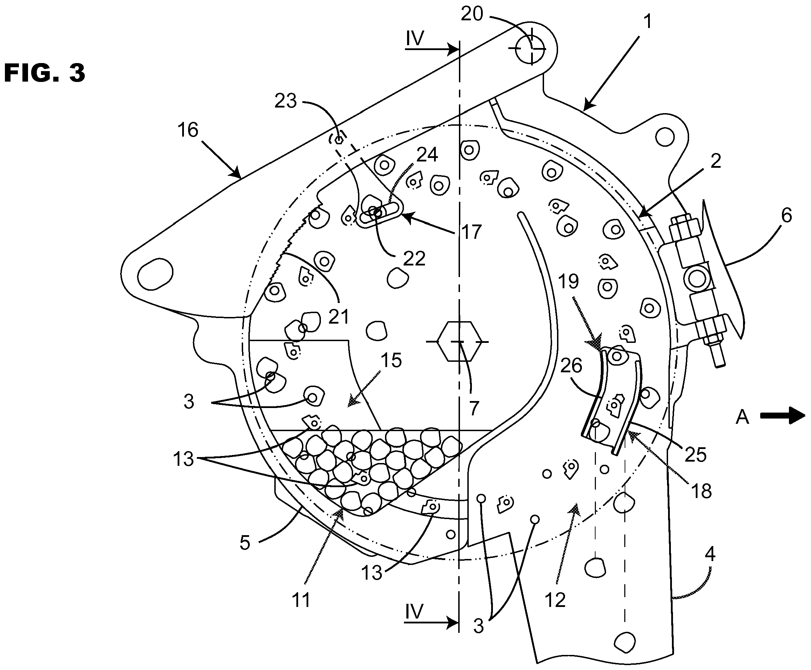

La figure 3 illustre le fonctionnement du boîtier de distribution (1) selon la présente invention. Le disque (2) et les pales d'agitation (13) sont représentés en traits discontinus. Des graines ont été représentées afin de mieux comprendre le fonctionnement. Le fond de boîtier (11) garni de graines s'étend dans le quart avant et inférieur du carter (5) compte tenu de la direction d'avance (A). Le fond de boîtier (11) est alimenté par la trémie par l'entrée (15). Le disque (2) tourne dans le sens horaire. L'aspiration des graines sur les perforations (3) se fait à partir du fond de boîtier (11). Dans le quart avant et supérieur du carter (5) est positionné au moins un sélecteur (16, 17) dont la fonction est d'éliminer les graines doubles retenues sur les perforations (3). Un tel sélecteur (16, 17) est placé tangentiellement par rapport aux cercles de perforations (3). Dans le quart arrière et inférieur, s'étend au moins un éjecteur (18, 19) facilitant le décrochement de la graine et son lâcher dans le tube de descente (4). Grâce à l'éjection mécanique des graines, le temps d'expulsion et la trajectoire des graines sont maîtrisés. De ce fait, le placement des graines dans le rang est régulier et précis.

A la lumière des figures 1 et 3, le boîtier de distribution (1) selon l'invention présente un sélecteur extérieur (16) et un éjecteur extérieur (18) destinés à agir sur le cercle extérieur (9) et, un sélecteur intérieur (17) et un éjecteur intérieur (19) destinés à agir sur le cercle intérieur (10). Grâce à ces équipements, la sélection d'une seule graine par perforation (3) et l'éjection de cette graine sont parfaitement contrôlées. Ainsi, les graines doubles maintenues sur les perforations (3) du cercle extérieur (9) sont éliminées par le sélecteur extérieur (16). Le sélecteur extérieur (16) est en forme de plaque. Il est monté sur le carter (5) via une articulation (20) d'axe sensiblement horizontal. Cette articulation (20) permet de positionner le bord inférieur (21) du sélecteur par rapport aux perforations (3) du cercle extérieur (9). Le bord inférieur (21) est configuré de manière à former une succession de rampes inclinées découpées en dents de scie. La succession de rampe permet d'éliminer les graines doubles situées autour de chaque perforation (3). Les graines doubles du cercle intérieur (10) sont éliminées par l'intermédiaire du sélecteur intérieur (17). Il est réalisé sous forme d'un doigt (22). Le doigt (22) est placé près des perforations (3) du cercle intérieur (10). Dans l'exemple de réalisation représenté, le sélecteur intérieur (17) est monté sur le sélecteur extérieur (16) au moyen d'une articulation (23). Sa position est réglable par rotation autour de l'articulation (23). Afin de bénéficier d'une plage de réglage plus étendue, le doigt (22) peut également se déplacer dans une rainure oblongue (24). Sa position peut ainsi être adaptée au mieux pour que le doigt (22) soit amené à frotter tangentiellement les graines retenues sur le cercle intérieur (10) et maintenir uniquement une graine par perforation (3). Le sélecteur intérieur (17) peut avoir d'autres formes. Le sélecteur intérieur (17) peut aussi directement être monté sur le carter (5).

Le décrochement des graines du cercle extérieur (9) respectivement celles du cercle intérieur (10) est facilité par la présence de l'éjecteur extérieur (18) et de l'éjecteur intérieur (19). L'éjecteur intérieur (19) est similaire à l'éjecteur extérieur (18). L'éjecteur extérieur (18) est constitué d'une rampe (25) qui a pour fonction d'aider au décrochement des graines. La graine, au cours de sa trajectoire, est poussée à se décrocher de la perforation (3) par cette rampe (25). Lors de la rotation du disque (2), les graines arrivant au niveau de l'ouverture de décharge (12) sont dans un premier temps légèrement poussées vers l'extérieur par la rampe (25) puis vient la zone de coupure du flux d'air. La graine est ensuite forcée à se décrocher puisque les perforations (3) passent dans la trajectoire de la rampe (25). La rampe (26) est similaire à la rampe (25). La rampe (26) de l'éjecteur intérieur (19) s'étend à l'intérieur du cercle intérieur (10). Les éjecteurs (18, 19) s'étendent dans le quart arrière et inférieur du boîtier de distribution (1).

Les perforations (3) sont avantageusement des ouvertures sous forme de trous ménagées dans le disque (2). Chaque perforation (3) présente une section circulaire. Les perforations (3) de chaque cercle (9, 10) présentent le même diamètre qui est adapté à la taille, à la forme et au poids de la graine qui va être semée.

L'invention trouve son application dans le domaine du semoir, du distributeur de précision. De façon générale, l'invention concerne une machine agricole qui est destinée à travailler sur des lignes ou rangées parallèles qui sont espacées d'un certain écartement.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Boîtier de distribution (1) pour semoir monograine comportant un disque (2) perforé monté rotatif sur un axe de rotation (7) pour la sélection de graines assistée par un flux d'air, ledit disque (2) séparant lesdites graines du flux d'air et présentant des perforations (3) disposées à intervalles réguliers sur au moins deux cercles concentriques (9, 10) situés au voisinage de sa périphérie, lesdites perforations (3) desdits deux cercles (9, 10) étant décalés angulairement l'une par rapport à l'autre et étant de taille adaptée aux graines à semer, ***caractérisé en ce que*** ledit disque (2) est muni sur sa périphérie de pales d'agitation (13) régulièrement espacées et décalées angulairement par rapport auxdites perforations (3), que lesdites pales d'agitation (13) s'étendent sur un cercle concentrique (14) auxdits cercles (9, 10) et que le cercle (14) s'étend entre deux cercles (9, 10), de manière que chaque pale (13) a une action à la fois sur les perforations (3) du cercle extérieur (9) et celles du cercle intérieur (10).

2. Boîtier selon la revendication 1, ***caractérisé en ce que*** lesdites pales d'agitation (13) sont disposées sur le cercle concentrique (14) auxdits deux cercles (9, 10) de perforations (3).

3. Boîtier selon la revendication 1 ou 2, ***caractérisé en ce que*** lesdites pales d'agitation (13) s'étendent sur le cercle concentrique (14) dont le diamètre est voisin du diamètre du cercle intérieur (10).

4. Boîtier selon l'une quelconque des revendications 1 à 3, ***caractérisé en ce que*** le nombre de pales d'agitation (13) est un nombre égal, multiple ou diviseur du nombre de perforations (3) formant l'un desdits cercles (9, 10).

5. Boîtier selon l'une quelconque des revendications 1 à 4, ***caractérisé en ce que*** chaque pale d'agitation (13) est disposée pour ne pas gêner l'éjection des graines des perforations (3) dudit cercle intérieur (10).

6. Boîtier selon la revendication 5, ***caractérisé en ce que*** chaque pale d'agitation (13) s'étend à l'arrière d'une perforation (3) respective dudit cercle intérieur (10) compte tenu du sens de rotation dudit disque (2).

7. Boîtier selon l'une quelconque des revendications 1 à 6, ***caractérisé en ce* qu'**un sélecteur intérieur (17) permet d'éliminer les graines doubles des perforations (3) dudit cercle intérieur (10).

8. Boîtier selon l'une quelconque des revendications 1 à 7, ***caractérisé en ce* qu'**un éjecteur intérieur (19) facilite le décrochement des graines des perforations (3) dudit cercle intérieur (10).

9. Boîtier selon l'une quelconque des revendications 1 à 8, ***caractérisé en ce que*** le système de sélection de graines est assisté par un flux d'air en dépression ou en pression.

10. Semoir monograine pneumatique présentant un boîtier de distribution selon l'une quelconque des revendications 1 à 9.

## Patentansprüche

1. Verteilerkasten (1) für Einzelkornsämaschine mit einer auf eine Drehachse (7) drehbar angebrachte Lochscheibe (2) zur Luftstrom gesteuerten Saatvereinzelung, wobei die Scheibe (2) die Saat von dem Luftstrom trennt und Bohrungen (3) aufweist, die in regelmässigen Abständen über mindestens zwei konzentrische Kreise (9, 10) angeordnet sind, die sich in der Nähe seines Umfangs befinden, wobei die Bohrungen (3) der beiden Kreise (9, 10) voneinander winkelversetzt sind und der zu säenden Saat angepasst sind, ***dadurch gekennzeichnet,* dass** die Scheibe (2) an seinem Umfang mit Rührklingen (13) versehen ist, die bezüglich der Bohrungen (3) regelmässig beabstandet und winkelverstezt sind, dass sich die Rührklingen (13) über einen Kreis (14) erstrecken, der zu den Kreise (9, 10) konzentrisch verläuft und, dass der Kreis (14) sich derart zwischen zwei Kreise (9, 10) erstreckt, dass jede Klinge (13) gleichzeitig eine Wirkung auf die Bohrungen (3) des Aussenkreises (9) und auf jene des Innenkreises (10) ausübt.

2. Verteilerkasten nach Anspruch 1, ***dadurch gekennzeichnet,* dass** die Rührklingen (13) über den Kreis (14), der zu den beiden Kreise (9, 10) von Bohrungen (3) konzentrisch ist, verlaufen.

3. Verteilerkasten nach Anspruch 1 oder 2, ***dadurch gekennzeichnet,* dass** die Rührklingen (13) sich über den konzentrischen Kreis (14) erstrecken, dessen Durchmesser nahe dem Durchmesser des Innenkreises (10) ist.

4. Verteilerkasten nach irgend einem der Ansprüche 1 bis 3, ***dadurch gekennzeichnet,* dass** die Anzahl der Rührklingen (13) eine gleiche, Mehrfach- oder Trennzahl der Anzahl von Bohrungen, die einer der Kreise (9, 10) bilden, ist.

5. Verteilerkasten nach irgend einem der Ansprüche 1 bis 4, ***dadurch gekennzeichnet,* dass** jede Rührklinge (13) derart angebracht ist, den Auswurf der Saat aus den Bohrungen (3) des Innenkreises (10) nicht zu verhindern.

6. Verteilerkasten nach Anspruch 5, ***dadurch gekennzeichnet,* dass** jede Rührklinge (13) sich bezüglich der Drehrichtung der Scheibe (2) hinter einer jeweiligen Bohrung (3) des Innenkreises (10) erstreckt.

7. Verteilerkasten nach irgend einem der Ansprüche 1 bis 6, ***dadurch gekennzeichnet,* dass** ein Innenvereinzler (17) gestattet, doppelte Samen an den Bohrungen (3) des Innenkreises (10) zu entfernen.

8. Verteilerkasten nach irgend einem der Ansprüche 1 bis 7, ***dadurch gekennzeichnet,* dass** ein innerer Saatauswerfer (19) den Saatzerfall von den Bohrungen (3) des Innenkreises (10) vereinfacht.

9. Verteilerkasten nach irgend einem der Ansprüche 1 bis 8, ***dadurch gekennzeichnet,* dass** das Saatvereinzelungssystem mittels eines drucklosen Lusftroms oder eines Druckluftstroms gesteuert ist.

10. Pneumatische Einzelkornsämaschine mit einem Verteilerkasten nach irgend einem der Ansprüche 1 bis 9.

## Claims

1. Distribution box (1) for precision seed-drills including a drilled disc (2) mounted in a rotating manner on a rotation axis (7) for seed separation assisted by an airflow, said disc (2) separating said seeds from the airflow and having drilling holes (3) positioned at regular intervals along at least two concentric circles (9, 10) situated in the vicinity of its periphery, said drilling holes (3) of said two circles (9, 10) being angularly offset relative to each other and being of a suitable size for the seeds to be sown, ***characterised in that*** said disc (2) is provided on its periphery with stirring blades (13) that are evenly spaced and angularly offset relative to said drilling holes (3), that said stirring blades (13) extend over a circle (14) concentric to said circles (9, 10) and that the circle (14) extends between two circles (9, 10), such that each blade (13) acts on both the drilling holes (3) of the outer circle (9) and those of the inner circle (10).

2. Box according to claim 1, ***characterised in that*** said stirring blades (13) are positioned along the circle (14) concentric to said two circles (9, 10) of drilling holes (3).

3. Box according to claim 1 or 2, ***characterised in that*** said stirring blades (13) extend over the concentric circle (14) whose diameter is close to the diameter of the inner circle (10).

4. Box according to any one of claims 1 to 3, ***characterised in that*** the number of stirring blades (13) is equal to, a multiple of, or a divisor of the number of drilling holes (3) forming one of said circles (9, 10).

5. Box according to any one of claims 1 to 4, ***characterised in that*** each stirring blade (13) is positioned so as not to hinder the ejection of the seeds from drilling holes (3) of said inner circle (10).

6. Box according to claim 5, ***characterised in that*** each stirring blade (13) extends at the rear of a respective drilling hole (3) of said inner circle (10) taking into account the direction of rotation of said disc (2).

7. Box according to any one of claims 1 to 6, ***characterised in that*** an inner selector (17) makes it possible to eliminate the double seeds from the drilling holes (3) of said inner circle (10).

8. Box according to any one of claims 1 to 7, ***characterised in that*** an inner ejector (19) facilitates the release of the seeds from the drilling holes (3) of said inner circle (10).

9. Box according to any one of claims 1 to 8, ***characterised in that*** the seed separation system is assisted by a depressurized or pressurized airflow.

10. Pneumatic precision seed-drill having a distribution box according to any one of claims 1 to 9.
